# EUROPÄISCHE PATENTSCHRIFT

(11) **EP 0 743 962 B1**
(45) Veröffentlichungstag und Bekanntmachung des Hinweises auf die Patenterteilung: **07.10.1998**
(21) Anmeldenummer: 95906354.6
(22) Anmeldetag: 28.01.1995
(51) Int. Cl.: C08G 63/66, C08G 63/668, C11D 3/37

(54) **AMPHIPHILE POLYESTER, VERFAHREN ZU IHRER HERSTELLUNG UND IHRE VERWENDUNG IN WASCHMITTELN**
AMPHIPHILIC POLYESTERS, PROCESS FOR PRODUCING THEM AND THEIR USE IN WASHING AGENTS
POLYESTERS AMPHIPHILES, LEUR PROCEDE DE PREPARATION ET LEUR UTILISATION COMME DETERGENTS

(30) Priorität: 08.02.1994 DE 4403866
(43) Veröffentlichungstag der Anmeldung: 27.11.1996
(73) Patentinhaber: BASF AKTIENGESELLSCHAFT, 67056 Ludwigshafen (DE)
(72) Erfinder: BOECKH, Dieter, D-67117 Limburgerhof (DE); JÄGER, Hans-Ulrich, D-67434 Neustadt (DE); SCHORNICK, Gunnar, D-67271 Neuleiningen (DE)
(86) Internationale Anmeldenummer: EP9500300
(87) Internationale Veröffentlichungsnummer: WO9521880

(56) Entgegenhaltungen:
- EP-A- 0 110 267
- EP-A- 0 241 984
- US-A- 3 083 187
- US-A- 3 310 512

## Beschreibung

Die Erfindung betrifft amphiphile Polyester, Verfahren zu ihrer Herstellung und ihre Verwendung als Zusatz zu Waschmitteln und Wäschenachbehandlungsmitteln.

Aus der US-A-3 557 039 sind stabile wäßrige Dispersionen von Polymerisaten bekannt, die durch Kondensation von Terephthalsäure oder Dimethylterephthalat mit Ethylenglykol und Polyethylenglykol eines durchschnittlichen Molekulargewichts von 1000 bis 4000 herstellbar sind. Das molare Verhältnis von Ethylenterephthalatzu Polyethylenglykolterephthalat-Einheiten beträgt 2:1 bis 6:1. Die Dispersionen werden zur Behandlung der Oberflächen von Polyesterartikeln verwendet.

Aus der GB-A1 154 730 ist bekannt, daß beim Waschen von Textilgut die Wiederablagerung von Schmutz auf dem Textilgut dadurch verringert werden kann, daß man zur Waschflotte, die ein Detergens enthält, Polykondensate zusetzt, die entweder sich wiederholende Ester- oder Amideinheiten enthalten. Bei diesen Zusätzen handelt es sich beispielsweise um Kondensationsprodukte, die aus der obengenannten US-PS 3 557 039 bekannt sind und die durch Kondensation von Dimethylterephthalat, Ethylenglykol und Polyethylenglykol eines Molekulargewichts von 1500 erhältlich sind.

Aus den EP-Anmeldungen 185 427, 241 984, 241 985 und 272 033 sind Polyesterkondensate von mehrwertigen aromatischen Carbonsäuren mit zweiwertigen Alkoholen und einseitig C₁-C₄-verschlossenen Polyethern bekannt, die die Schmutzablösung von Polyestergeweben fördern. Diese Polyester besitzen hydrophile Endgruppen, die in den genannten Anmeldungen als Voraussetzung für die schmutzablösenden Eigenschaften der Polyester genannt werden.

Amphiphile Polyester aus aliphatischen mehrbasischen Carbonsäuren und/oder Monohydroxymonocarbonsäuren mit Polyethylenglykol werden beispielsweise in Polymer Bulletin, Band 17, 499 - 506 (1987) beschrieben.

Aus der US-A-5 142 020 sind amphiphile Polyester bekannt, die erhältlich sind durch Kondensation von
(a) Carbonsäuren mit mindestens 2 Carboxylgruppen, deren Estern, Anhydriden oder Mischungen,
(b) mindestens zweiwertigen Alkoholen und/oder Additionsprodukten von 1 bis 5 mol mindestens eines Alkylenoxids mit 2 oder 3 C-Atomen an 1 mol eines mindestens zweiwertigen Alkohols oder Mischungen und
(c) wasserlöslichen Anlagerungsprodukten von 5 bis 80 mol mindestens eines Alkylenoxids an 1 mol C₈- bis C₂₄-Alkohole, C₈- bis C₁₈-Alkylphenole oder C₈- bis C₂₄-Alkylamine
im Molverhältnis (a):(b):(c) von 100:(25 bis 2500): (5 bis 110) bei Temperaturen von mindestens 120°C bis zu Molekulargewichten (Gewichtsmittel) von 2000 bis 50000. Die Polyester werden als vergrauungsinhibierender und schmutzablösungsfördernder Zusatz zu pulverförmigen und flüssigen Waschmitteln verwendet.

Der vorliegenden Erfindung liegt die Aufgabe zugrunde, neue Stoffe und Waschmitteladditive zur Verfügung zu stellen.

Die Aufgabe wird erfindungsgemäß gelöst mit amphiphilen Polyestern, die
(a) Ester-Einheiten aus Polyalkylenglykolen einer Molmasse von 500 bis 7 500 und aliphatischen Dicarbonsäuren und/oder Monohydroxymonocarbonsäuren und
(b) Ester-Einheiten aus aromatischen Dicarbonsäuren und mehrwertigen Alkoholen
enthalten und Molmassen von 1 500 bis 25 000 haben.

Die amphiphilen Polyester werden dadurch erhalten, daß man zunächst durch Polykondensation
(a) aliphatische Polyester von Polyalkylenglykolen einer Molmasse von 500 bis 7 500 mit aliphatischen Dicarbonsäuren und/oder Monohydroxymonocarbonsäuren und anschließend in dem so erhaltenen aliphatischen Polyester
(b) aromatische Polyester aus aromatischen Dicarbonsäuren und mehrwertigen Alkoholen
herstellt, die Reihenfolge der Polykondensation umkehrt oder oligomere aromatische Polyester (b) mit oligomeren aliphatischen Polyestern (a) kondensiert.

Die oben beschriebenen amphiphilen Polyester werden als Zusatz zu Waschmitteln, anderen Waschmitteladditiven und Wäschenachbehandlungsmitteln verwendet.

Die amphiphilen Polyester mit Ester-Einheiten aus (a) Polyalkylenglykolen und aliphatischen Dicarbonsäuren und/oder Monohydroxymonocarbonsäuren (im folgenden "aliphatischer Block" genannt) und (b) aromatischen Dicarbonsäuren und mehrwertigen Alkoholen (im folgenden "aromatischer Block" genannt) haben in Waschflotten schmutzablösungsfördernde Eigenschaften und besitzen eine sehr gute biologische Abbaubarkeit.

Die aliphatischen Blöcke (a) werden durch Polykondensation von Polyalkylenglykolen einer Molmasse von 500 bis 7 500 mit aliphatischen Dicarbonsäuren und/oder Monohydroxymonocarbonsäuren nach bekannten Verfahren hergestellt. Die Polykondensation wird beispielsweise bei Temperaturen von mindestens 120, vorzugsweise in dem Temperaturbereich von 150 bis 260°C in Gegenwart üblicher Polykondensations- oder Umesterungskatalysatoren durchgeführt. In der Regel kondensiert man die Reaktionsteilnehmer in einer Inertgasatmosphäre, wobei man gegebenenfalls noch in Gegenwart weiterer Zusätze, wie Antioxydantien, arbeiten kann. Solche Verfahren sind z.B. aus der eingangs genannten US-A-3 557 039 bekannt.

Als Katalysatoren eignen sich sämtliche in der Literatur dafür beschriebenen Verbindungen. Verwendet man bei der Kondensation die freien Polycarbonsäuren oder die Anhydride, so ist p-Toluolsulfonsäure der bevorzugte Katalysator. Wenn man Dicarbonsäuredialkylester oder Polycarbonsäureester einsetzt, so verwendet man die üblichen Umesterungskatalysatoren, wie beispielsweise Zinkacetat, Mischungen aus Calciumacetat und Antimonoxid oder Tetraalkoxytitanate, wie Titantetraisobutanolat oder Titantetraisopropanolat. Andere, vorzugsweise eingesetzte Katalysatoren sind beispielsweise Carbonate, Acetate und/oder C₁-C₄-Alkoxylate von Lithium, Natrium, Magnesium, Kobalt, Mangan, Vanadin, Titan und Zinn sowie Zinnoxide. Die Katalysatoren werden im allgemeinen in Mengen von 20 bis 5 000, vorzugsweise 50 bis 2 000 ppm, bezogen auf die bei der Kondensation eingesetzten Komponenten, verwendet.

Die Kondensation kann in Gegenwart von Antioxidantien durchgeführt werden, z.B. von substituierten Phenolen, wie beispielsweise 2,5-Ditertiärbutylphenol, 2-Methylcyclohexyl-4,6-dimethylphenol, 2,6-Ditertiärbutyl-4-methylphenol, Pyrogallol, phosphoriger Säure oder anderer üblicherweise hierfür verwendeten Antioxidantien. Diese Verbindungen verhindern Verfärbungen der Polyester durch Oxidation während der Kondensation.

Zur Herstellung der aliphatischen Blöcke (a) geeignete Polyalkylenglykole haben Molmassen (Zahlenmittel) von 500 bis 7 500, vorzugsweise 1 000 bis 4 500. Die Polyalkylenglykole sind wasserlöslich. Sie leiten sich vorzugsweise von Ethylenoxid, Propylenoxid, n-Butylenoxid oder Isobutylenoxid ab und werden z.B. durch Addition der Alkylenoxide an zweiwertige Alkohole hergestellt. Dabei kann man so vorgehen, daß man beispielsweise nur Ethylenoxid oder Propylenoxid an einen zweiwertigen Alkohol, wie Ethylenglykol oder Propylenglykol, anlagert oder man stellt Blockcopolymerisate her, indem man zunächst Ethylenoxid und danach Propylenoxid an einen zweiwertigen Alkohol addiert oder die Addition in umgekehrter Reihenfolge vornimmt. Bei der Herstellung der Polyalkylenglykole kann z.B. Propylenoxid ganz oder teilweise durch ein Butylenoxid ersetzt werden. Auch statistisch aufgebaute Polyalkylenoxide, die durch Anlagerung eines Mischgases von mindestens zwei Alkylenoxiden an einen zweiwertigen Alkohol erhältlich sind, können als Polyalkylenglykole bei der Herstellung der aliphatischen Blöcke (a) eingesetzt werden. Vorzugsweise verwendet man als Polyalkylenglykole Ethylenglykol, Propylenglykol und Blockcopolymerisate aus Ethylenoxid und Propylenoxid.

Geeignete aliphatische Dicarbonsäuren enthalten z.B. 2 bis 10 Kohlenstoffatome. Beispiele hierfür sind Oxalsäure, Malonsäure, Bernsteinsäure, Glutarsäure, Adipinsäure, Maleinsäure, Fumarsäure, Itaconsäure und Citraconsäure. Sie können entweder einzeln oder in Mischung, z.B. Gemische aus Oxalsäure und Bernsteinsäure oder aus Bernsteinsäure und Adipinsäure bei der Herstellung der aliphatischen Blöcke eingesetzt werden.

Die Herstellung der aliphatischen Blöcke der amphiphilen Polyester kann gegebenenfalls noch zusätzlich in Gegenwart von Monohydroxymonocarbonsäuren vorgenommen werden. Eine weitere Variante besteht darin, daß man Monohydroxymonocarbonsäuren anstelle der aliphatischen Dicarbonsäuren einsetzt. Bei den Monohydroxymonocarbonsäuren handelt es sich ebenfalls um aliphatische Carbonsäuren. Beispiele hierfür sind Glykolsäure, Milchsäure, ω-Hydroxystearinsäure und ω-Hydroxycapronsäure. Sie können einzeln oder in Mischung bei der Herstellung der aliphatischen Blöcke eingesetzt werden.

Die aliphatischen Blöcke werden vorzugsweise durch Polykondensation von Polyethylenglykol mit Bernsteinsäure oder Adipinsäure hergestellt. Bei dieser bevorzugten Variante kann die Polykondensation gegebenenfalls noch zusätzlich in Gegenwart von ω-Hydroxycapronsäure und/oder Milchsäure durchgeführt werden.

Der aromatische Block (b) der amphiphilen Polyester ist beispielsweise durch Polykondensation von aromatischen Dicarbonsäuren mit aliphatischen mehrwertigen Alkoholen erhältlich. Die Polykondensation wird nach den gleichen Verfahren durchgeführt, die auch zur Herstellung der aliphatischen Blöcke (a) angewendet werden. Die Molmassen (Gewichtsmittel) der aromatischen Blöcke (b) betragen üblicherweise ca. 192 bis 5 000, vorzugsweise ca. 384 bis 1 500.

Als aromatische Dicarbonsäuren kommen beispielsweise Terephthalsäure, Phthalsäure und Sulfoisophthalsäure in Betracht. Vorzugsweise setzt man Terephthalsäure als aromatische Dicarbonsäure ein. Die Dicarbonsäuren können gegebenenfalls auch in Mischung untereinander eingesetzt werden.

Geeignete aliphatische mehrwertige Alkohole sind z.B. Ethylenglykol, Propylenglykol-1,2, Propylenglykol-1,3, Butandiol-1,4, Butandiol-2,3, Pentandiole, Glycerin, Pentaerythrit, Oligoglycerine mit Molekulargewichten bis zu 363 sowie Additionsprodukte von 1 bis 5 mol Ethylenoxid und/oder Propylenoxid an 1 mol der obengenannten mindestens zweiwertigen Alkohole. Beispiele für solche Additionsprodukte sind Ethylendiglykol und Propylendiglykol. Von Interesse sind auch die Additionsprodukte von 1 bis 4 mol Ethylenoxid an Pentaerythrit, Additionsprodukte von 1 bis 3 mol Ethylenoxid an 1 mol Glycerin, Additionsprodukte von 1 bis 3 mol Propylenoxid an 1 mol Glycerin und Additionsprodukte von 1 bis 5 mol Ethylenoxid und/oder Propylenoxid an 1 mol Oligoglycerin mit 2 bis 5 einkondensierten Glycerineinheiten.

Bevorzugt eingesetzte mehrbasische Alkohole sind Ethylenglykol, Propylenglykol, Diethylenglykol. Dipropylenglykol, Butandiol-1,4, Glycerin und Pentaerythrit. Man kann selbstverständlich auch Mischungen mehrwertiger Alkohole bei der Herstellung der aromatischen Blöcke (b) einsetzen.

Die amphiphilen Polyester haben Molmassen (Gewichtsmittel) von 1 500 bis 25 000, vorzugsweise von 2 500 bis 7 500. Das Verhältnis der Ester-Einheiten (a) : (b) beträgt in den amphiphilen Polyestern 5 : 1 bis 1 : 2, vorzugsweise 3 : 1 bis 1 : 1.

Die erfindungsgemäßen amphiphilen Polyester können beispielsweise dadurch hergestellt werden, daß man zunächst in einer ersten Reaktionsstufe einen aromatischen Block (b) synthetisiert, indem man z.B. durch Kondensation von Terephthalsäure oder Dimethylterephthalat mit mehrwertigen Alkoholen oligomere Alkylenterephthalate mit Hydroxy-Endgruppen herstellt. Solche Polykondensate werden erhalten, wenn man bei der Kondensation der Ausgangsstoffe einen molaren Überschuß an OH-Gruppen aufweisenden Verbindungen, d.h. einem mehrwertigen Alkohol, einsetzt. Die so erhältlichen Vorkondensate werden dann in einer zweiten Reaktionsstufe mit einer aliphatischen Dicarbonsäure, einem Ester einer Dicarbonsäure oder einem Anhydrid einer Dicarbonsäure (falls die Dicarbonsäuren Anhydride bilden können), einem wasserlöslichen Polyalkylenglykol und gegebenenfalls einer Monohydroxycarbonsäure oder deren Ester zu den erfindungsgemäßen amphiphilen Polyestern umgesetzt.

Man kann die Reaktion in der ersten Stufe jedoch auch so führen, daß man z.B. ausgehend von Terephthalsäure oder Dimethylterephthalat und mehrwertigen Alkoholen oligomere Alkylenterephthalate mit Carboxy-Endgruppen herstellt (molarer Überschuß von Carboxylgruppen bei der Polykondensation) und diese Vorkondensate dann in einer zweiten Reaktionsstufe mit mindestens einer Monohydroxymonocarbonsäure oder deren Ester zu einem Polyester umsetzt, der aus der einkondensierten Monohydroxycarbonsäure stammende Carboxy-Endgruppen aufweist, der anschließend mit einem Polyethylenglykol und gegebenenfalls einer aliphatischen Dicarbonsäure oder deren Ester zu den amphiphilen Polyestern zur Reaktion gebracht wird.

Der Einsatz der Monohydroxycarbonsäure bei der Kondensation ist fakultativ. Das in der ersten Stufe erhältliche Carboxy-Endgruppen aufweisende Vorkondensat kann auch direkt mit mindestens einem Polyalkylenglykol und mindestens einer aliphatischen Dicarbonsäure umgesetzt werden.

Man kann bei der Herstellung der erfindungsgemäßen amphiphilen Polyester jedoch auch so vorgehen, daß man zu einem Carboxy-Endgruppen aufweisenden Vorkondensat aus beispielsweise Terephthalsäure oder Dimethylterephthalat und einem mehrwertigen Alkohol mit einem separat davon hergestellten aliphatischen Block aus einem wasserlöslichen Veresterungsprodukt aus 1 mol eines Polyalkylenglykols und 2 mol einer Monohydroxycarbonsäure durch Veresterung verknüpft. Das Veresterungsprodukt kann gegebenenfalls zusätzlich noch mit mindestens einer aliphatischen Dicarbonsäure umgesetzt sein.

Eine weitere Verfahrensvariante zur Herstellung der erfindungsgemäßen Polyester besteht darin, daß man zunächst in einer ersten Reaktionsstufe aus mindestens einem Polyalkylenglykol und mindestens einer aliphatischen Dicarbonsäure und gegebenenfalls mindestens einer Monohydroxyymonocarbonsäure ein Vorkondensat erzeugt und es in einer zweiten Reaktionsstufe mit einer Mischung aus mindestens einem mehrwertigen Alkohol und mindestens einer aromatischen Dicarbonsäure oder deren Ester zu den erfindungsgemäßen amphiphilen Polyestern kondensiert.

Bei der Herstellung der erfindungsgemäßen Blockstrukturen aufweisenden Polykondensate werden die Ausgangsstoffe in einem solchen Verhältnis eingesetzt, daß Polyester entstehen, bei denen das Gewichtsverhältnis der Ester-Einheiten (a) : (b) 5 : 1 bis 1 : 2, vorzugsweise 3 : 1 bis 1 : 1 beträgt. Die amphiphilen Polyester werden als Zusatz zu Waschmitteln, anderen Waschmitteladditiven und Wäschenachbehandlungsmitteln eingesetzt. Sie fördern dabei in den Waschflotten die Ablösung von hydrophoben Anschmutzungen, insbesondere bei Textilien aus Polyestergewebe oder Polyestermischgeweben. Unter anderen Waschmitteladditiven sollen beispielsweise Wasserenthärter (z.B. Schichtsilikate, Polycarboxylate oder Phosphate) oder Bleichmittel verstanden werden. Die erfindungsgemäß zu verwendenden Polyester sind dann besonders wirksam, wenn das Gewebe bereits vor einer Anschmutzung damit gewaschen oder imprägniert worden ist.

Die erfindungsgemäßen Polyester können sowohl in pulverförmigen als auch in flüssigen Waschmittelformulierungen als Additiv enthalten sein. Die Einsatzmengen an Polyester betragen beispielsweise 0,05 bis 15 Gew.-%, bezogen auf die jeweilige Formulierung. Die amphiphilen Polyester werden vorzugsweise in phosphatfreien und in phosphatreduzierten Waschmitteln oder in Wäschenachbehandlungsmitteln, wie Weichspülern, verwendet. Phosphatreduzierte Waschmittel enthalten im allgemeinen weniger als 25 Gew.-% Phosphat.

Die erfindungsgemäßen Polyester sind in Wasser löslich oder können darin dispergiert werden. Sie können in Form einer wäßrigen Lösung, als Dispersion oder als Pulver bei der Herstellung von Waschmitteln eingesetzt werden. Ein besonderer Vorteil der erfindungsgemäßen amphiphilen Polyester mit Blockstruktur ist die bessere biologische Abbaubarkeit im Vergleich zu Polyestern aus rein aromatischen Carbonsäuren bei sonst gleichem Aufbau.

Die Zusammensetzung der Wasch- und Reinigungsmittelformulierungen kann sehr unterschiedlich sein. Wasch- und Reinigungsmittelformulierungen enthalten üblicherweise 2 bis 50 Gew.-% Tenside und gegebenenfalls Builder. Diese Angaben gelten sowohl für flüssige als auch für pulverförmige Waschmittel. Wasch- und Reinigungsmittelformulierungen, die in Europa, in den USA und in Japan gebräuchlich sind, findet man beispielsweise in Chemical und Engn. News, Band 67, 35 (1989) tabellarisch dargestellt. Weitere Angaben über die Zusammensetzung von Wasch- und Reinigungsmitteln können der WO-A-90/13581 sowie Ullmanns Encyklopädie der technischen Chemie, Verlag Chemie, Weinheim 1983, 4. Auflage, Seiten 63-160, entnommen werden. Die Waschmittel können gegebenenfalls noch ein Bleichmittel enthalten, z.B. Natriumperborat, das im Fall seines Einsatzes in Mengen bis zu 30 Gew.-% in der Waschmittelformulierung enthalten sein kann. Die Wasch- und Reinigungsmittel können gegebenenfalls weitere übliche Zusätze enthalten, z.B. Komplexbildner, Trübungsmittel, optische Aufheller, Enzyme, Parfümöle, Farbübertragungsinhibitoren, Vergrauungsinhibitoren und/oder Bleichaktivatoren.

Die Prozentangaben in den Beispielen sind Gewichtsprozent. Die erfindungsemäßen Polymere werden durch die Bestimmung der OH-Zahl und der Säurezahl charakterisiert. Die Bestimmung dieser Kennzahlen erfolgte nach Standardmethoden, z.B. beschrieben bei E. Müller, Houben-Weyl, Methoden der organischen Chemie, Georg Thieme Verlag, Stuttgart 1963, Band 14/2, S. 17/18.

Die Bestimmung der Molmassen erfolgte durch Gelpermeationschromatographie (Lösemittel Tetrahydrofuran, Säulenmaterial PL-Gel - Hersteller: Polymer Laboratories, GB - Elutionsgeschwindigkeit 0,8 ml/min, Temperatur 35°C). Als Standard wurde engverteiltes Polystyrol verwendet. Detektion erfolgte mit UV-Detektor bei 254 nm.

### Beispiele

### Beispiel 1

In einer für die Durchführung von Polykondensationen geeigneten Apparatur, die beheizbar war, mit einem Rührer, einer Vorrichtung für das Arbeiten unter Stickstoffatmosphäre und einer Destillationsbrücke versehen war, wurden 600 g Polyethylenglykol einer Molmasse von 1 500 (Zahlenmittel) und 88,0 g Bernsteinsäureanhydrid vorgelegt und nach Zusatz von 0,86 g p-Toluolsulfonsäure-Monohydrat und 0,86 g 50 %iger wäßriger phosphoriger Säure unter Rühren in einer Stickstoffatmosphäre 2 Stunden auf eine Temperatur von 180°C erhitzt.

Zu diesem Vorprodukt wurden anschließend 127 g Ethylenglykol und 132,8 g Terephthalsäure gegeben und das Reaktionsgemisch im Stickstoffstrom stufenweise auf 245°C aufgeheizt. Über eine Kolonne wurde das bei der Polykondensation entstehende Wasser zusammen mit flüchtigen Anteilen abdestilliert. Nach einer Kondensationsdauer von 3 Stunden und von 4 Stunden wurden jeweils weitere 10 g Ethylenglykol zugegeben. Nach 5 Stunden wurde die Kolonne entfernt und soviel Wasser abdestilliert, bis das Polykondensat eine Säurezahl von 2 aufwies. Nach 8,5 stündiger Kondensation wurde überschüssiges Ethylenglykol im Vakuum abdestilliert und 1,5 Stunden bei 1 mbar und einer Temperatur von 245°C weiterkondensiert.

Man erhielt ein hellbeiges Festprodukt, das eine Molmasse (Gewichtsmittel) von 4100 hatte.

### Beispiel 2

Das Beispiel 1 wurde wiederholt mit der Änderung, daß 1,13 g para-Toluolsulfonsäure, 1,13 g phosphorige Säure (50 %ig), 186 g Ethylenglykol und 265,6 g Terephthalsäure eingesetzt wurden.

Man erhielt ein hellbeiges Festprodukt mit einer Molmasse (Gewichtsmittel) von 17 800.

### Beispiel 3

Das Beispiel 1 wurde wiederholt mit der Änderung, daß 1,13 g para-Toluolsulfonsäure, 1,35 g phosphorige Säure (50 %ig), 260,4 g Ethylenglykol und 398,4 g Terephthalsäure eingesetzt wurden.

Man erhielt ein hellbeiges Festprodukt mit einer Molmasse (Gewichtsmittel) von 14 700.

### Beispiel 4

Das Beispiel 3 wurde wiederholt mit der Änderung, daß die Kondensationsphase am Ende auf 1 Stunden verkürzt wurde.

Man erhielt ein hellbeiges Festprodukt mit einer Molmasse (Gewichtsmittel) von 10 200.

### Beispiel 5

In der im Beispiel 1 beschriebenen Apparatur wurden 750 g Polyethylenglykol eines Molekulargewichts von 4 000 (Zahlenmittel), 41,3 g Bernsteinsäureanhydrid, 1,0 g p-Toluolsulfonsäure-Monohydrat und 1,0 g 50 %ige wäßrige phosphorige Säure gemischt und unter einer Stickstoffatmosphäre 2 Stunden bei einer Temperatur von 245°C kondensiert. Zu diesem Vorprodukt gab man dann 87,3 g Ethylenglykol und 124,5 g Terephthalsäure zu und kondensierte die Mischung bei der angegebenen Temperatur weiter, wobei man über eine Kolonne flüchtige Anteile abdestillierte. Nach einer Kondensationszeit von 5 Stunden wurde die Kolonne entfernt und die Destillation so lange fortgesetzt, bis das Polykondensationsprodukt eine Säurezahl von 3,5 hatte. Nach einer Kondensationsdauer von 6 Stunden und von 8 Stunden fügte man jeweils weitere 10 g Ethylenglykol zu. Nach insgesamt 10,5 Stunden wurde das überschüssige Ethylenglykol abdestilliert und 1,5 Stunden bei 1 mbar und 245°C weiterkondensiert.

Man erhielt ein hellbeiges hartes Festprodukt, das eine Molmasse (Gewichtsmittel) von 8 400 hatte.

### Beispiel 6

In der in Beispiel 1 beschriebenen Apparatur wurden 466,1 g Dimethylterephthalat, 429,0 g Ethylenglykol und 0,90 g Tetrabutyl-o-titanat bei 150 bis 180°C innerhalb 2 Stunden unter Abdestillieren von Methanol vorkondensiert und anschließend im Vakuum überschüssiges Ethylenglykol abdestilliert. Man entspannte mit Inertgas und setzte 900 g Polyethylenglykol der Molmasse 1 500 (Zahlenmittel) und 132 g Bernsteinsäureanhydrid zu und kondensierte zunächst bei Normaldruck unter stufenweiser Anhebung der Temperatur von 180°C auf 245°C. Ab einer Säurezahl von 23 wurde Vakuum angelegt und 4 Stunden bei 1 mbar auskondensiert.

Man erhielt ein hellbraunes Festprodukt mit einer Molmasse (Gewichtsmittel) von 6 800.

### Beispiel 7

Beispiel 5 wurde wiederholt mit der Änderung, daß 600 g Polyethylenglykol der Molmasse 4 000 (Zahlenmittel) mit 33,0 g Bernsteinsäureanhydrid, 1,05 g para-Toluolsulfonsäure, 2,13 g phosphorige Säure (50 %ig), 169 g Ethylenglykol und 265,6 g Terephthalsäure kondensiert wurden.

Man erhielt ein hellbraunes Festprodukt mit einer Molmasse (Gewichtsmittel) von 12 400.

### Beispiel 8

Beispiel 5 wurde wiederholt mit der Änderung, daß 600 g Polyethylenglykol der Molmasse 4 000 (Zahlenmittel) mit 33,0 g Bernsteinsäureanhydrid, 1,19 g para-Toluolsulfonsäure, 2,38 g phosphorige Säure (50 %ig), 192,6 g Ethylenglykol und 348,6 g Terephthalsäure kondensiert wurden.

Man erhielt ein hellbraunes Festprodukt mit einer Molmasse (Gewichtsmittel) von 13 100.

### Beispiel 9

In der im Beispiel 1 beschriebenen Apparatur wurden 600 g Polyethylenglykol vom Molekulargewicht 1 500 (Zahlenmittel), 128,6 g Adipinsäure, 1,39 g p-Toluolsulfonsäure-Monohydrat und 1,39 g 50 %ige wäßrige phosphorige Säure gemischt und im Stickstoffstrom unter Abdestillieren des bei der Kondensation entstehenden Wassers 2 Stunden auf eine Temperatur von 180°C erhitzt. Zu diesem Vorprodukt gab man dann 160,4 g Ethylenglykol und 398,4 g Terephthalsäure und führte die Kondensation bei einer Temperatur von 245°C fort. Die flüchtigen Anteile wurden über eine Kolonne abdestilliert. Nach 5 Stunden entfernte man die Kolonne und kondensierte das Reaktionsgemisch unter Abdestillieren von Wasser solange, bis es eine Säurezahl von 3,5 hatte, wobei man nach 6 und nach 8 Stunden jeweils 10 g Diethylenglykol zugab. Nach einer Kondensationszeit von 10,5 Stunden wurde das überschüssige Diethylenglykol im Vakuum abdestilliert.

Man erhielt ein hellbeiges hartes Festprodukt, das eine Molmasse (Gewichtsmittel) von 9 700 hatte.

### Beispiel 10

Beispiel 9 wurde wiederholt mit der Änderung, daß 1,18 g para-Toluolsulfonsäure, 1,18 g phosphorige Säure (50 %ig), 186 g Ethylenglykol und 265,6 g Terephthalsäure eingesetzt wurden.

Man erhielt ein farbloses Festprodukt mit eine Molmasse (Gewichtsmittel) von 4 300.

### Beispiel 11

Beispiel 6 wurde wiederholt mit der Änderung, daß anstelle von Bernsteinsäureanhydrid 192,7 g Adipinsäure eingesetzt wurden.

Man erhielt ein hellbraunes Festprodukt mit einer Molmasse (Gewichtsmittel) von 8 400.

Die schmutzablösenden Eigenschaften der Polymeren wurden im Waschtest ermittelt. Hierzu wurde 3 mal vorgewaschen (Tabelle 1 enthält die Waschbedingungen) und die Remission (Meßgerät: Data color 2000) der Testgewebe bestimmt (R¹). Mit gebrauchtem Motoröl wurde angeschmutzt, 24 Stunden einwirken lassen und die Remission bestimmt (R²). Danach wurde nochmals gewaschen und die Remission (R³) gemessen. Die Schmutzablösung S in % wurde nach der Formel S=(R³⁻R²)/(R¹-R²)*100 berechnet.

**Tabelle 1:**

| Waschbedingungen | |
|---|---|
| Waschgerät | Launder-o-meter |
| Waschmittelflotte | 250 ml |
| Waschmitteldosierung | 6 g/l |
| Waschzeit | 30 min |
| Waschtemperatur | 60°C |
| Vorwaschzyklen | 3 |
| Prüfgewebe | 10 g Baumwolle, 5 g Polyester/Baumwolle, 5 g Polyester |
| Anschmutzung | 0,2 g gebrauchtes Motoröl auf Polyester |

Die Tabelle 2 enthält die Zusammensetzung der verwendeten Testwaschmittel. Die in Tabelle 2 angegebenen Waschmittelformulierungen enthielten 1 % eines Polykondensates nach Beispiel 11.

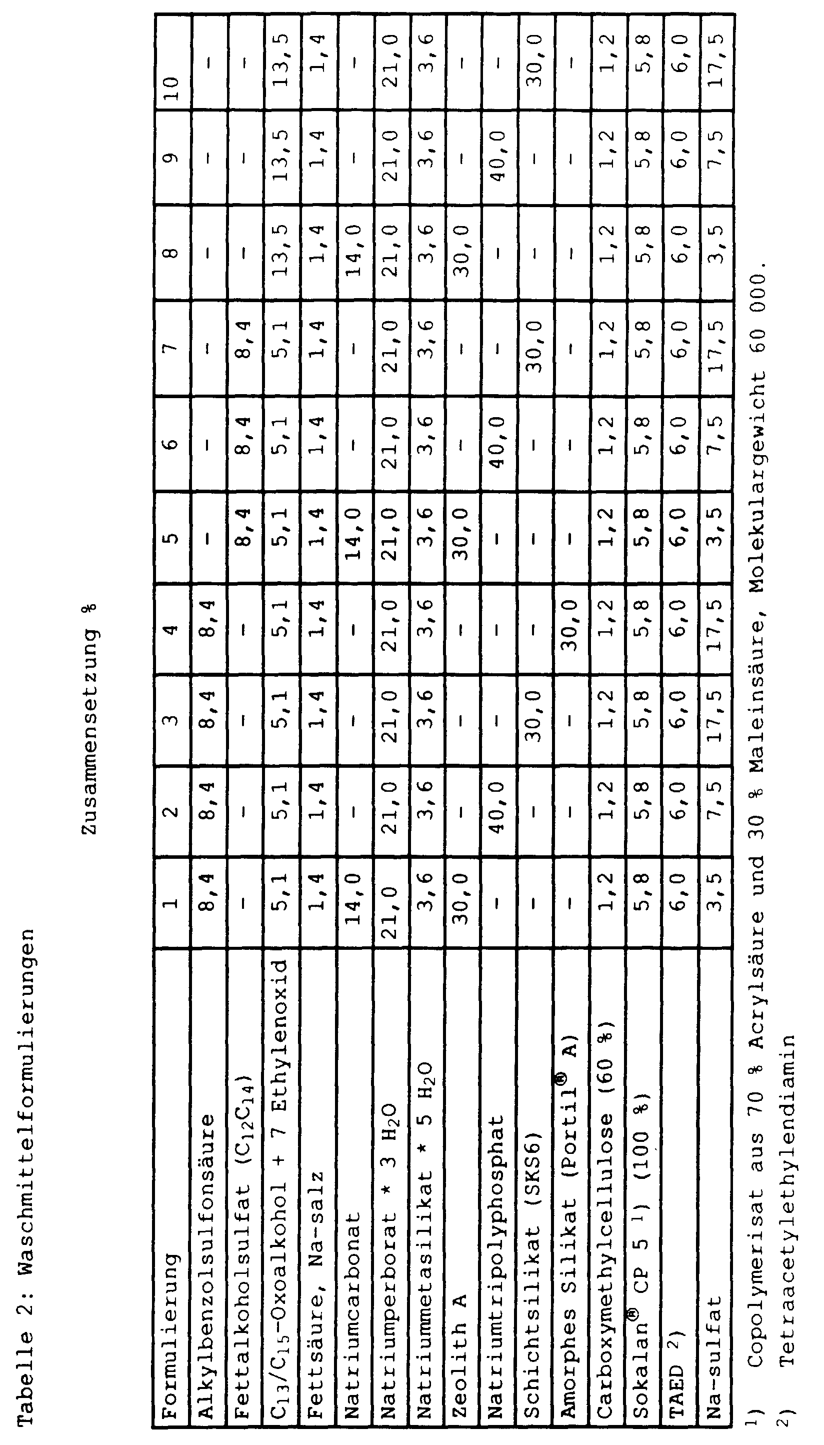

Die Ergebnisse in Tabelle 3 zeigen, daß in allen Fällen eine Schmutzentfernung (S) von über 80 % erfolgt, wenn Polymer eingesetzt wird.

**Tabelle 3:**

| Schmutzablösung | | | | | | |
|---|---|---|---|---|---|---|
| R¹ = 81 % | | | | | | |
| Beisp. | Vergl. beisp. | Formulierung | Polymer aus Beispiel 11 | (R²) angeschmutzt | (R³) gewaschen | S (%) |
| | 1 | 1 | --- | 19,1 | 29,0 | 16,0 |
| 12 | | 1 | 1 Gew.-% | 19,5 | 73,6 | 88,0 |
| | 2 | 2 | --- | 19,6 | 24,4 | 7,8 |
| 13 | | 2 | 1 Gew.-% | 19,3 | 71,3 | 84,3 |
| | 3 | 3 | --- | 19,4 | 26,4 | 11,4 |
| 14 | | 3 | 1 Gew.-% | 19,4 | 74,6 | 89,6 |
| | 4 | 4 | --- | 18,9 | 27,4 | 13,7 |
| 15 | | 4 | 1 Gew.-% | 19,7 | 73,6 | 87,9 |
| | 5 | 5 | --- | 19,6 | 33,1 | 22,0 |
| 16 | | 5 | 1 Gew.-% | 19,3 | 74,3 | 89,1 |
| | 6 | 6 | --- | 19,2 | 23,3 | 6,6 |
| 17 | | 6 | 1 Gew.-% | 18,9 | 70,9 | 83,7 |
| | 7 | 7 | --- | 19,1 | 33,6 | 23,4 |
| 18 | | 7 | 1 Gew.-% | 19,0 | 73,8 | 88,4 |
| | 8 | 8 | --- | 19,1 | 44,6 | 41,2 |
| 19 | | 8 | 1 Gew.-% | 18,9 | 78,6 | 96,1 |
| | 9 | 9 | --- | 18,8 | 35,2 | 26,4 |
| 20 | | 9 | 1 Gew.-% | 18,9 | 78,4 | 95,8 |
| | 10 | 10 | --- | 19,0 | 44,3 | 40,8 |
| 21 | | 10 | 1 Gew.-% | 21,0 | 79,2 | 97,0 |

Die Wirksamkeit von Polymeren wurde auch in einem Markenwaschmittel geprüft. Hierzu wurde Persil® color der Firma Henkel KGaA verwendet. Die Prüfbedingungen wurden entsprechend den Angaben in Tabelle 1 gewählt. Tabelle 4 enthält die jeweils getesteten amphiphilen Blockcopolyester sowie die Ergebnisse für die Schmutzentfernung. Die Mengen Polymer beziehen sich auf die eingesetzte Menge Waschmittel.

Die Waschergebnisse in Tabelle 4 zeigen, daß mit den nach den Beispielen 1 bis 11 hergestellten Polymeren die Schmutzentfernung deutlich verbessert wird.

**Tabelle 4:**

| Schmutzentfernung in einem Markenwaschmittel | | | |
|---|---|---|---|
| Beispiel Beispiel | Blockpolyester hergestellt nach Beispiel | S (%) ohne Polymer | S (%) mit 1 % Polymer |
| 22 | 1 | 34 | 79 |
| 23 | 2 | 34 | 91 |
| 24 | 3 | 36 | 86 |
| 25 | 4 | 39 | 69 |
| 26 | 5 | 36 | 85 |
| 27 | 6 | 39 | 77 |
| 28 | 7 | 42 | 60 |
| 29 | 8 | 42 | 90 |
| 30 | 9 | 42 | 64 |
| 31 | 10 | 42 | 90 |
| 32 | 11 | 42 | 92 |

## Patentansprüche

1. Amphiphile Polyester, dadurch gekennzeichnet, daß sie Blöcke aus
(a) Ester-Einheiten aus Polyalkylenglykolen einer Molmasse von 500 bis 7 500 und aliphatischen Dicarbonsäuren und/oder Monohydroxymonocarbonsäuren und
(b) Ester-Einheiten aus aromatischen Dicarbonsäuren und mehrwertigen Alkoholen
enthalten und Molmassen von 1 500 bis 25 000 haben.

2. Amphiphile Polyester nach Anspruch 1, dadurch gekennzeichnet, daß das Gewichtsverhältnis der Ester-Einheiten (a) : (b) 5 : 1 bis 1 : 2 beträgt.

3. Verfahren zur Herstellung der amphiphilen Polyester nach Anspruch 1 oder 2, dadurch gekennzeichnet, daß man zunächst durch Polykondensation
(a) aliphatische Polyester von Polyalkylenglykolen einer Molmasse von 500 bis 7 500 mit aliphatischen Dicarbonsäuren und/oder Monohydroxymonocarbonsäuren und anschließend in dem so erhaltenen aliphatischen Polyester
(b) aromatische Polyester aus aromatischen Dicarbonsäuren und mehrwertigen Alkoholen
herstellt, die Reihenfolge der Polykondensation umkehrt oder oligomere aromatische Polyester (b) mit oligomeren aliphatischen Polyestern (a) kondensiert.

4. Verfahren nach Anspruch 3, dadurch gekennzeichnet, daß das Gewichtsverhältnis von (a) : (b) 3 : 1 bis 1 : 1 beträgt.

5. Verwendung der amphiphilen Polyester nach Anspruch 1 oder 2 als Zusatz zu Waschmitteln, anderen Waschmitteladditiven und Wäschenachbehandlungsmitteln.

## Claims

1. Amphiphilic polyesters containing blocks of
(a) ester units derived from polyalkylene glycols having a molar mass of from 500 to 7500 and aliphatic dicarboxylic acids and/or monohydroxymonocarboxylic acids and
(b) ester units derived from aromatic dicarboxylic acids and polyhydric alcohols
and having molar masses of from 1500 to 25,000.

2. Amphiphilic polyesters as claimed in claim 1, wherein the weight ratio of ester units (a) : (b) is within the range from 5 : 1 to 1 : 2.

3. A process for preparing the amphiphilic polyesters of claim 1 or 2, which comprises polycondensing to prepare first
(a) aliphatic polyesters of polyalkylene glycols having a molar mass of from 500 to 7500 with aliphatic dicarboxylic acids and/or monohydroxymonocarboxylic acids and then, within the aliphatic polyester thus obtained,
(b) aromatic polyesters from aromatic dicarboxylic acids and polyhydric alcohols,
reversing the order of the polycondensation, or condensing oligomeric aromatic polyesters (b) with oligomeric aliphatic polyesters (a).

4. A process as claimed in claim 3, wherein the weight ratio of (a) : (b) is within the range from 3 : 1 to 1 : 1.

5. The use of the amphiphilic polyesters of claim 1 or 2 as ingredient in laundry detergents, other laundry detergent additives and laundry aftertreatments.

## Revendications

1. Polyesters amphiphiles, caractérisés en ce qu'ils contiennent des blocs constitués
(a) de motifs ester de polyalkylèneglycols ayant une masse molaire de 500-7500 et d'acides dicarboxyliques aliphatiques et/ou d'acides monohydroxymonocarboxyliques et
(b) de motifs ester d'acides dicarboxyliques aromatiques et d'alcools polyfonctionnels
et en ce qu'ils ont une masse molaire de 1500-25000.

2. Polyesters amphiphiles selon la revendication 1, caractérisés en ce que le rapport en poids des motifs ester (a) : (b) vaut de 5 : 1 à 1 : 2.

3. Procédé de préparation de polyesters amphiphiles selon la revendication 1 ou 2, caractérisé en ce que l'on prépare d'abord par polycondensation
(a) des polyesters aliphatiques de polyalkylèneglycols ayant une masse molaire de 500-7500 et d'acides dicarboxyliques aliphatiques et/ou d'acides monohydroxymonocarboxyliques et ensuite dans les polyesters aliphatiques ainsi obtenus
(b) des polyesters aromatiques d'acides dicarboxyliques aromatiques et d'alcools polyfonctionnels,
on inverse l'ordre de la polycondensation ou on condense les polyesters aromatiques oligomères (b) avec les polyesters aliphatiques oligomères (a).

4. Procédé selon la revendication 3, caractérisé en ce que le rapport en poids (a) : (b) vaut de 3 : 1 à 1 : 1.

5. Utilisation de polyesters amphiphiles selon la revendication 1 ou 2 en tant qu'additifs pour agents de lavage, autres adjuvants pour agents de lavage et agents de post-traitement de lavage.
